# EUROPÄISCHE PATENTSCHRIFT

(11) **EP 0 635 098 B1**
(45) Veröffentlichungstag und Bekanntmachung des Hinweises auf die Patenterteilung: **06.08.1997**
(21) Anmeldenummer: 94906835.7
(22) Anmeldetag: 02.02.1994
(51) Int. Cl.: F01N 3/28, F01N 3/20, B01J 35/04

(54) **VORRICHTUNG ZUR KATALYTISCHEN REINIGUNG VON STRÖMENDEN GASEN, INSBESONDERE VON ABGASEN VON VERBRENNUNGSMOTOREN**
DEVICE FOR THE CATALYTIC PURIFICATION OF FLOWING GASES, ESPECIALLY EXHAUST GASES OF INTERNAL COMBUSTION ENGINES
DISPOSITIF D'EPURATION CATALYTIQUE DE GAZ EN ECOULEMENT, NOTAMMENT DE GAZ D'ECHAPPEMENT DE MOTEURS A COMBUSTION INTERNE

(30) Priorität: 10.02.1993 DE 4303850
(43) Veröffentlichungstag der Anmeldung: 25.01.1995
(73) Patentinhaber: BUCK, Alfred, D-72108 Rottenburg (DE)
(72) Erfinder: BUCK, Alfred, D-72108 Rottenburg (DE)
(74) Vertreter: Rüger, Rudolf, Dr.-Ing.
(86) Internationale Anmeldenummer: DE9400113
(87) Internationale Veröffentlichungsnummer: WO9418440

(56) Entgegenhaltungen:
- EP-A- 0 340 784
- US-A- 3 949 109
- PATENT ABSTRACTS OF JAPAN vol. 15, no. 478 (C-0891)4. Dezember 1991 & JP,A,03 207 453 (MATSUSHITA) 10. September 1991
- JAPANESE PATENTS ABSTRACTS (EXAMINED) Section Ch, Week 9140, 1991 Derwent Publications Ltd., London, GB; Class J04, AN 91291529 NICHIAS & JP,A,03 193 336 (NICHIAS) 23. August 1991
- PATENT ABSTRACTS OF JAPAN vol. 6, no. 231 (C-135)17. November 1982 & JP,A,57 135 032 (MATSUSHITA) 20. August 1982
- PATENT ABSTRACTS OF JAPAN vol. 4, no. 111 (M-025)9. August 1980 & JP,A,55 068 520 (TOYOTOMI) 23. Mai 1980
- PATENT ABSTRACTS OF JAPAN vol. 10, no. 314 (C-380)24. Oktober 1986 & JP,A,61 125 440 (MATSUSHITA) 13. Juni 1986
- JAPANESE PATENTS GAZETTE Section Ch, Week 8034, 1980 Derwent Publications Ltd., London, GB; Class H06, AN 8059189C & JP,A,55 088 858 (MATSUSHITA) 5. Juli 1980

## Beschreibung

Die Erfindung betrifft eine Vorrichtung zur katalytischen Reinigung von strömenden Gasen, insbesondere von Abgasen von Verbrennungsmotoren, mit einem in einem Gasströmungsweg anzuordnenden Gehäuse, das einen gasdurchlässigen Träger in Form eines textilen Flächengebildes aus warmfestem Fasermaterial enthält, auf das ein katalytisch wirksames Material aufgebracht ist.

Die für die Abgasreiningung von Fahrzeugmotoren, insbesondere Otto-Motoren gebräuchlichen Katalysatoren bestehen durchweg aus keramischen Monolithen in Form extrudierter Zellenkörper, die an den von dem Abgas bestrichenen Oberflächen mit einem katalytisch wirksamen Material, insbesondere Platin beschichtet sind. Diese mechanisch empfindlichen Monolithen sind in Metallgehäusen untergebracht, in denen sie elastisch abgestützt sein müssen, was gewisse Probleme mit sich bringt. Um eine ausreichend große Oberfläche zu erhalten, müssen sie vor dem Aufbringen des katalytisch wirksamen Materials mit einem sogenannten "washcoat" beschichtet werden, der jedoch bei Temperaturen über 800° C rasch altert. Wegen dieser thermischen Empfindlichkeit können diese Katalysatoren nicht unmittelbar am Motor angeordnet werden. Andererseits bringt aber die Anordnung in verhältnismäßig großem Abstand vom Motor, zusammen mit der beträchtlichen Masse der Monolithen den Nachteil mit sich, daß das Aufheizen der Monolithen auf die Betriebstemperatur nach einem Kaltstart eine verhältnismäßig lange Zeit in Anspruch nimmt. Während dieser Aufheizperiode ist der Katalysator somit lediglich beschränkt wirksam. Da der Zellenkörper des Monolithen von den Abgasen im wesentlichen in laminarer Strömung druchströmt wird, ist auch die Umsatzrate prinzipbedingt beschränkt.

Aus der DE-OS 38 01 634 ist eine Filter- und Nachverbrennungseinrichtung für Abgase bekannt. Diese Einrichtung weist ein rohrförmiges Gehäuse auf, das sich an beiden Enden trichterförmig verjüngt, um den Durchmesser des Gehäuses an den Durchmesser der ankommenden und wegführenden Abgasleitungen anzupassen. Im Inneren des Gehäuses befinden sich konzentrisch zueinander mehrere Lagen radial durchströmbarer, zylindrischer Filterelemente von im wesentlichen Kreisquerschnitt. Die Filterelemente sind in radialer Richtung voneinander beabstandet und die zwischen jeweils benachbarten Filterelementen gebildeten Ringspalte sind abwechselnd auf unterschiedlichen Stirnseiten gasdicht verschlossen. Das durch die Filtereinrichtung strömende Abgas wird dadurch gezwungen, im wesentlichen radial durch die Filterelemente hindurchzuströmen.

Jedes Filterelement selbst besteht aus einem Drahtgestrick oder aus Keramikfasern, die gegebenenfalls katalytisch beschichtet sind. Aufgrund dieses Aufbaus kommt der Abgasstrom nur über eine verhältnismäßig sehr kurze Strecke mit dem katalytisch wirkenden Material in Berührung.

Die DE-OS 41 37 105 zeigt einen Katalysatorkörper, der aus einem Gewirr sich kreuzender Drähte oder Fasern besteht und in dem Abgaskrümmer eines Verbrennungsmotors angeordnet ist. Wegen dieser vliesartigen Ausgestaltung besteht in Verbindung mit dem pulsierenden Abgasstrom eine erhöhte Gefahr, daß das vliesartige Gebilde in seine Einzeldrähte zerfällt und mit dem Abgasstrom fortgeblasen wird.

Aus der DE-OS 37 31 766 ist ein Rußfilter bekannt, dessen eigentlicher Filterkörper aus einer rundgestrickten Maschenware besteht. Die rundgestrickte Maschenware wird auf einem Träger aufgebracht und bei der Benutzung von dem Abgasstrom in Richtung parallel zu den Lagen oder Schichten des Filtermaterials durchströmt.

Ausgehend hiervon ist es Aufgabe der Erfindung, eine Vorrichtung zur katalytischen Reinigung von strömenden Gasen zu schaffen, die eine gute Abstimmbarkeit auf verschiedenste Druckbedingungen und eine erhöhte Haltbarkeit aufweist.

Zur Lösung dieser Aufgabe ist die eingangs genannte Vorrichtung erfindungsgemäß dadurch gekennzeichnet, daß der Träger für das katalytisch wirksame Material ein Gestrick ist, das leporelloartig gefaltet und zu einem Stapel aus aufeinanderliegenden Lagen zusammengelegt ist und in der Gestrickebene der einzelnen Lagen durchströmt ist.

Das Fasermaterial enthält mit Vorteil keramische Mikrofasern, worunter Fasern mit einem Durchmesser von 3 µm und mehr verstanden sind. Als zweckmäßig haben sich insbesondere polykristalline MullLcfasern erwiesen, doch sind auch andere warmfeste Fasermaterialen geeignet. So kann das Fasermaterial für bestimmte Einsatzzwecke auch Kohlenstoffasern enthalten oder ganz aus diesen bestehen. Die Oberfläche der Fasern des Fasermaterials liegt zweckmäßigerweise zwischen 0,1 und 0,4 m²/g, insbesondere 0,2 und 0,4 m²/g und größer, ohne daß dieser Bereich eine Beschränkung der grundsätzlich verwendbaren Fasern darstellt.

Ein Gestrick, dessen Fasern den Träger für das katalytisch wirksame Material bilden, bietet, wie sich gezeigt hat, einen hohen Stoffaustausch zu den Faseroberflächen bei gleichzeitiger hervorragender strömungstechnischer Konfiguration. Es ist volumenelastisch und unempfindlich gegen Vibrationen und Pulsationen des Gasstromes. Die mit dem katalytischen Material beschichteten Fasern sind in dem Gestrick dimensionierbar vorgespannt und fest eingebunden. Trotzdem liegt ihre Oberfläche weitgehend frei; sie können sich begrenzt gegeneinander bewegen, so daß Verspannungen abgebaut und gedämpft werden. Die weitgehend exponierte Faseroberfläche gewährleistet eine maximale katalytische Wirksamkeit.

Die Struktur des Gestrickes bildet ein vielfältiges Porensystem in dem Widerstandselemente enthalten sind, so daß sich auch bei laminarer Durchströmung in allen Strömungsbereichen ein großer Wandkontakt und damit hoher Massenaustausch ergibt, wie dies für eine gute katalytische Wirkung wesentlich ist. Innerhalb des Gestrickes selbst ist der Strömungsweg vielfach verzweigt, mit dem Ergebnis, daß die einzelnen das katalytisch wirksame Material tragenden Fasern großflächig angeströmt werden.

Wegen seiner besonderen Struktur gewährleistet das Gestrick zusätzlich eine hervorragende Durchmischung eines bezüglich Konzentration oder Temperatur strähnigen Abgasstromes. Daraus ergibt sich ein besonderer Vorteil bei Mehrzylinderverbrennungsmotoren und der sogenannten Lambda 1-Technik. Schließlich weist ein solches Gestrick gute Schalldämpfungseigenschaften auf, wobei es außerdem als Filter für partikelförmige Schadstoffe beispielsweise Rußteilchen wirkt.

Die bereits erwähnte gute Einbindung der Fasern in dem Gestrick bewirkt, daß etwa auftretende Faserbruchstücke in dem Gestrick weitgehend verankert bleiben, während andererseits eine Schadensfortschreitung von einer aufgetretenen Schadensstelle aus praktisch nicht stattfindet. Es können deshalb auch Kurzfasergarne Verwendung finden.

Das Gestrick kann zumindest zweifädig aus verschiedenen Fasermaterialien gearbeitet sein, von denen die Fasern des einen und/oder des anderen Fasermaterials gleiches oder verschiedenes katalytisch wirksames Material tragen konnen. In dem Gestrick kann auch wenigstens ein Metallfaden verarbeitet sein, der dem Gestrick beispielsweise eine zusätzliche Formstabilität verleiht. Denkbar ist es außerdem, in dem Gestrick Kohlenstoffasern mit vergrößerter Oberfläche (aktivierte Kohlenstoffasern) zu verarbeiten, um damit die Möglichkeit zu eröffnen, beispielsweise während der Kaltstartphase auftretende unverbrannte Kohlenwasserstoffe vorübergehend zu adsorbieren und die so adsorbierten Stoffe in einer nachfolgenden Periode wieder zu desorbieren (Spitzenemission).

Zu diesem Zwecke kann das Gestrick elektrisch leitende Fasern enthalten, die mit Anschlußmitteln für eine elektrische Stromquelle elektrisch leitend verbunden sind und die damit eine unmittelbare Innenbeheizung des Gestrickes erlauben. Diese Innenbeheizung kann aber nicht nur zur Desorption adsorbierter Stoffe verwendet werden, sondern insbesondere auch dazu, während der Kaltstartphase das Gestrick mit dem katalytisch wirksamen Material rasch auf die Betriebstemperatur zu bringen. Die elektrisch leitenden Fasern können Kohlenstoff- oder Metallfasern in Gestalt von metalldrähten etc. sein.

Die Kohlenstoffasern können auch auf ihrer Oberfläche eine elektrisch isolierende Beschichtung tragen, beispielsweise SiO₂. Dazu wird auf die Fasern SiC aufgebracht, das durch Wärmeinwirkung in SiO₂ umgewandelt wird. Eine solche SiO₂ -Beschichtung bildet gleichzeitig Schutz gegen Oxidation.

Das Fasermaterial ist in dem Gestrick, in der Regel in Form von Garnen aus Stapel- oder Endlosfasern verarbeitet. Garnstränge aus Endlosfasern haben in dem Gestrick in wesentlichen nur einen Anfang und ein Ende und bieten damit geringe Schadensangriffsfläche. Stapelfasern hingegen, geben mit ihrem aus den Garnstrangen herausstehenden Faserenden eine etwas größere Oberflache und bessere Filterwirkung. Welche der beiden Faserarten - die gegebenenfalls auch in Mischung verwendet werden können - im Einzelfall der Vorzug gegeben wird, hängt von den Einsatzbedingungen ab. Grundsätzlich ist es auch denkbar, daß das Gestrick Fasermaterial in Form von Rovings enthalt.

In jedem Fall sind Fasern mit rauher Oberfläche glatten Fasern vorzuziehen. Durch Beeinflußung der Oberflächentopografie der Fasern kann die Oberfläche, wie sich gezeigt hat, etwa um den Faktor 20 vergrößert werden.

Das für das Gestrick verwendete Garnmaterial sollte möglichst wenig gedreht sein, weshalb wie erwähnt eben auch Rovings in Frage kommen. In der Praxis hat sich Garn mit bis zu einer Drehung pro Inch Länge als vorteilhaft gezeigt. Texturiertes, gelocktes Garn ist häufig vorzuziehen.

Bei der Durchströmung des Gestrickes soll die Strömung möglichst keine widerstands freien Wege entlang der durch die Maschenstruktur bedingten "Großporen" finden. Dies läßt sich dadurch vermeiden, daß das Gestrick so eingesetzt wird, daß es im wesentlichen in der Gestrickebene gasdurchströmt ist. Ein anderer Weg besteht darin, das Gestrick zu kompaktieren, um damit die "Großporen" zu schließen. Damit ist aber in der Regel eine Erhöhung des resultierenden Durchströmwiderstandes somit des an dem Gestrick auftretenden Druckabfalles verbunden.

In einem Gestrick bleiben die Maschenbögen auch bei starker lokaler Verstreckung noch gekrümmt, das heißt, die Fasern werden im Gegensatz zu den Verhältnissen bei Geweben oder in einem Wickel nie voll gestreckt. Das hat zur Folge, daß die Vorspannung der Fasern begrenzt bleibt, so daß die Fasern in dem Garnstrang gegeneinander locker bleiben und große freie wirksame Oberflächen darbieten. Um diese Vorspannung zu verändern, kann es zweckmäßig sein, wenn das Gestrick unter einer vorbestimmten Spannung in Richtung der Maschenstäbchen und/oder der Maschenreihen gehalten ist. In dem den zu reinigenden Gasstrom durch das katalytische wirksame Gestrick leitenden Gehäuse kann das Gestrick zur Füllung des zu durchströmenden Katalysatorvolumens unter Verwendung unterschiedlicher Konfektionierungstechniken angeordnet sein. So ist es möglich, daß das Gestrick teilweise aufgerollt oder gefaltet ist; es kann auch zumindest teilweise plissiert oder gedoppelt sein. Von Vorteil hat es sich erwiesen, wenn das Gestrick rundgestrickt ist. Der so gebildete Strickschlauch kann dann in sich aufgerollt oder wie erwähnt plissiert, gefaltet oder in anderer zweckentsprechender Weise angeordnet werden. Grundsatzlich ist es auch denkbar, diesen Schlauch beispielsweise zu einem "Seil" zusammen zu drehen und ihn in dieser Form auf einen Dorn - gegebenenfalls mehrlagig - spiralig aufzuwickeln.

Da bei Verwendung von entsprechendem Fasermaterial, beispielsweise von Keramikfasern, die mit dem katalytisch wirksamen Material beschichtet sind, das Gestrick hochtemperaturfest ist, kann der aus diesem Gestrick hergestellte Katalysator auch unmittelbar hinter den Auslaßventilen eines Verbrennungsmotors angeordnet werden. Das Gestrick gewährleistet eine so feste Verankerung der Fasern in dem Maschenverbund, daß es den in diesem Bereich noch stark ausgeprägten Pulsationen des Abgasstromes widerstehen kann, wobei gleichzeitig der von dem Gestrick hervorgerufene Druckabfall so klein ist, daß er die Funktion des Verbrennungsmotors nicht wesenlich beeinträchtigt. Dabei kann das Gestrick in entsprechender Konfektionierung gegebenenfalls auch unmittelbar in dem Auspuffkrümmer des Verbrennungsmotors angeordnet sein, derart, daß dieser - oder ein anschließender Teil der Abgasleitung - gegebenenfalls das Gehäuse für den Katalysator bildet. Eine Anordnung dieses Katalysators vor einem gegebenenfalls vorhandenen Abgasturbolader oder Druckwellenlader ist denkbar.

Grundsätzlich gilt schließlich, daß das katalytisch wirksame Material auf das Gestrick oder vor dem Verstricken auf das Garn aufgebracht werden kann. In bestimmten Fällen ist auch eine Aufbringung auf die Einzelfasern vor deren Verarbeitung zu einem Garn denkbar.

In den Zeichnungen sind Ausführungsbeispiele des Gegenstandes der Erfindung dargestellt. Es zeigen:
- Fig. 1: eine Vorrichtung gemäß der Erfindung in Gestalt eines zur Anordnung in der Auspuffleitung eines Verbrennungsmotors bestimmten Katalysators im axialen Schnitt, in einer Seitenansicht und in schematischer Darstellung,
- Fig. 2: eine Vorrichtung ähnlich Fig. 1 in einer abgewandelten Ausführungsform und in einer entsprechenden Darstellung,
- Fig. 3: ein mit einem katalytisch wirksamen Material beschichtetes Gestrick des Katalysators nach Fig. 1 oder 2 im Ausschnitt in perspektivischer Darstellung unter Veranschaulichung verschiedener Anströmungsrichtungen,
- Fig. 4: das Gestrick nach Fig. 1 in der Draufsicht im Ausschnitt unter Veranschaulichung verschiedener Dehnungszustände,
- Fig. 5: ein schwach gedrehtes Garn des Gestrickes nach Fig. 3 im Ausschnitt in schematischer Darstellung und in einem anderen Maßstab,
- Fig. 6: ein stark gedrehtes Garn im Vergleich zu Fig. 5 im Ausschnitt und in einer entsprechenden Darstellung,
- Fig. 7: ein schematisches Diagramm zur Veranschaulichung der Anströmverhältnisse einer Faser des Gestrickes nach Fig. 3,
- Fig. 8: eine schematische Darstellung der grundsätzlichen Anströmungsverhältnisse bei dem Gestrick nach Fig. 3 im Schnittbild,
- Fig. 9: das Gestrick nach Fig. 3 in plissierter Form in schematischer Darstellung unter Veranschaulichung der Anströmverhältnisse,
- Fig. 10: das Gestrick nach Fig. 3 in gefalteter Form unter Veranschaulichung der Anströmverhältnisse,
- Fig. 11: das Gestrick nach Fig. 3 in Form eines rundgestrickten und anschließend teilweise plissierten Warenschlauches in perspektivischer schematischer Darstellung, teilweise in Schnitt,
- Fig. 12: die plissierte Rundstrickware nach Fig. 11 im Schnitt in einer Seitenansicht unter Veranschaulichung der Anströmverhältnisse sowie in schematischer Darstellung,
- Fig. 13: das Gastrick nach Fig. 3 in Form eines zumindest einmal gefalteten rundgestrickten Warenschlauches in perspektivischer schematischer Darstellung,
- Fig. 14: die gefaltete Rundstrickware nach Fig. 13 schraubenförmig aufgewickelt und im axialen Schnitt in einer schematischen Seitenansicht unter Veranschaulichung der Anströmverhältnisse,
- Fig. 15 bis 18: eine Vorrichtung gemäß der Erfindung in Form eines unmittelbar in dem Auspuffkrümmer eines Verbrennungsmotors untergebrachten Katalysators in verschiedenen Ausführungsformen und schematischen Schnittdarstellungen,
- Fig. 19: das Gestrick nach Fig. 3 in einer abgewandelten Ausführungsform im Ausschnitt und in schematischer Darstellung,
- Fig. 20: ein Fadensystem des Gestricks nach Fig. 19 unter Veranschaulichung der elektrischen Anschlußverhältnisse,
- Fig. 21 und 22: den Katalysator nach Fig. 1 in zwei abgewandelten Ausführungsformen unter Verwendung des Gestricks nach Fig. 19/20, jeweils im axialen Schnitt,in einer Seitenansicht und in schematischer Darstellung.

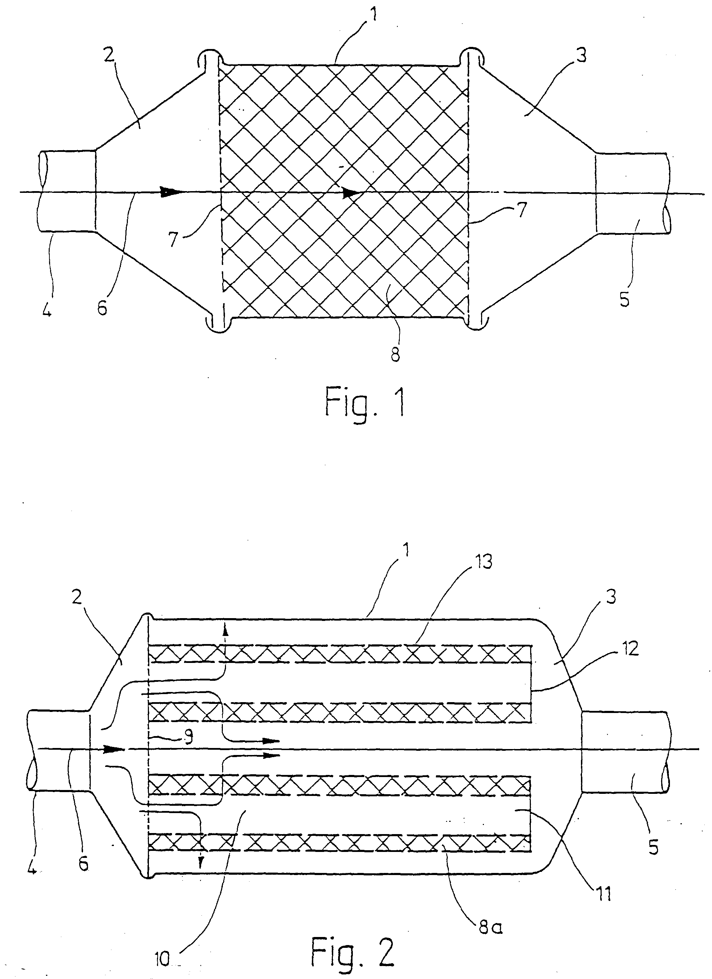

In den Fig. 1, 2 sind schematisch zwei gebräuchliche Grundformen von Katalysatoren für Verbrennungsmotoren dargestellt. Sie weisen jeweils ein im Querschnitt vorzugsweise zylindrisches oder ovales Blechgehäuse 1 auf, das auf beiden Stirnseiten über einen Einström- oder Abströmtrichter 2 bzw. 3 mit einem einströmseitigen und einem abströmseitigen Rohrstutzen 4 bzw. 5 verbunden ist, der es erlaubt, das Gehäuse 1 in der Auspuff- oder Abgasleitung eines nicht weiter dargestellten Verbrennungsmotors derart anzuordnen, daß im Betrieb der Gehäuseinnenraum in der bei 6 angedeuteten Axialrichtung von den zu reinigenden Abgasen gleichmäßig durchströmt ist.

Bei der einfachen Ausführungsform nach Fig. 1 ist in dem Gehäuse zwischen zwei Lochplatten 7 ein gasdurchlässiger Katalysatorkörper 8 angeordnet, der den Innenraum des Gehäuses 1 vollständig ausfüllt. Bei der sogenannten Kerzenbauform nach Fig. 2 sind demgegenüber in dem Gehäuse 1 an einer entsprechend gestalteten Lochplatte 9 befestigt mehrere achsparallele zylindrische Katalysatoreinheiten 10 untergebracht, von denen jede im wesentlichen aus einem kerzenförmigen Gehäuse 11 besteht, das auf einer Bodenseite bei 12 verschlossen sowie mantelseitig aus Lochblech 13 hergestellt ist. Jedes der kerzenförmigen Gehäuse 11 ist innen mit einem gasdurchlässigen zylindrischen Katalysatorkörper 8a ausgekleidet, der im Betrieb im wesentlichen radial von innen nach außen von Abgasen durchströmt ist.

Der Katalysatorkörper 8 bzw. 8a besteht aus einem gasdurchlässigen Träger in Form eines Gestrickes, das katalytisch wirksames Fasermaterial enthält und der Form des Katalysatorkörpers 8, 8a entsprechend konfektioniert ist.

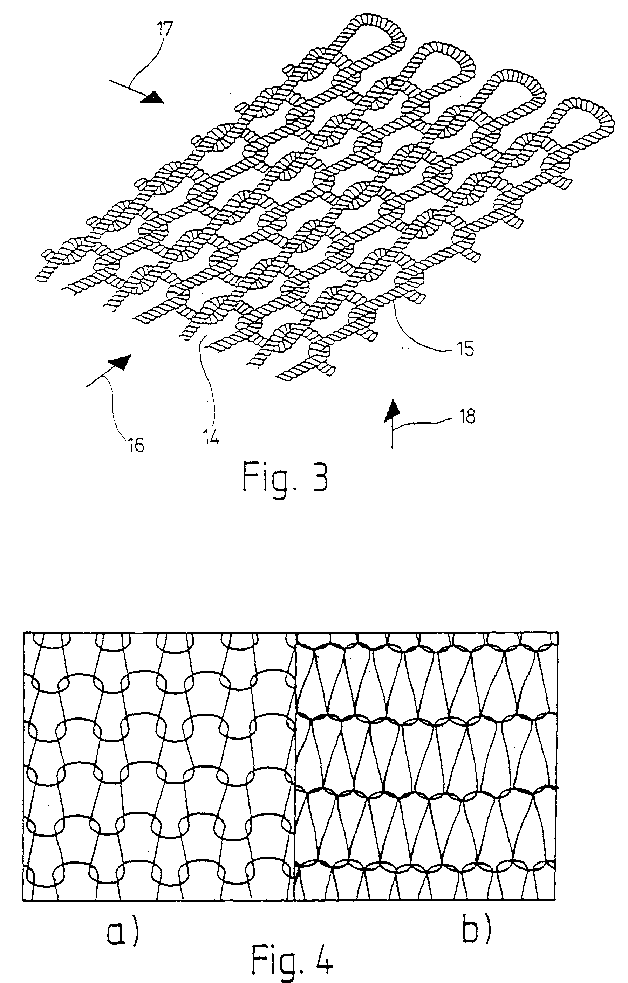

Das Gestrick, von dem ein Ausschnitt bei 14 in den Fig. 3, 4 dargestellt ist, kann, wie veranschaulicht, ein Rechts-/Links-Gestrick sein, doch sind, abhängig vom jeweiligen Einsatzzweck, auch andere ein- und mehrflächige Gestrickbindungen denkbar. Diese Gestricke können auch bindungsgemustert, z.B. mit Fangmaschen, gearbeitet sein; sie können auch abschnittsweise unterschiedliche Maschenbindungen aufweisen. Wie aus einem Vergleich der beiden Abb. a und b der Fig. 4 zu entnehmen, die das gleiche Gestrick 14 einmal ungestreckt (a) und einmal in Richtung der Maschenstäbchen gestreckt (b) zeigen, sind die Maschenbögen auch bei starker lokaler Verstreckung noch gekrümmt. Im Gegensatz zu den Verhältnissen bei einem Gewebe oder einem dochtartigen Faserwickel werden die Fasern nie voll gestreckt. Solange das Gestrick nicht überdehnt wird - was durch eine geeignete Konfektionierung auszuschließen ist - bleiben die Fasern in dem Garnstrang gegeneinander beweglich, so daß ihre katalytisch wirksame Oberfläche für die Anströmung durch das zu reinigende, den Katalysatorkörper 8, 8a durchströmende Abgas im wesentlichen voll zugänglich bleibt.

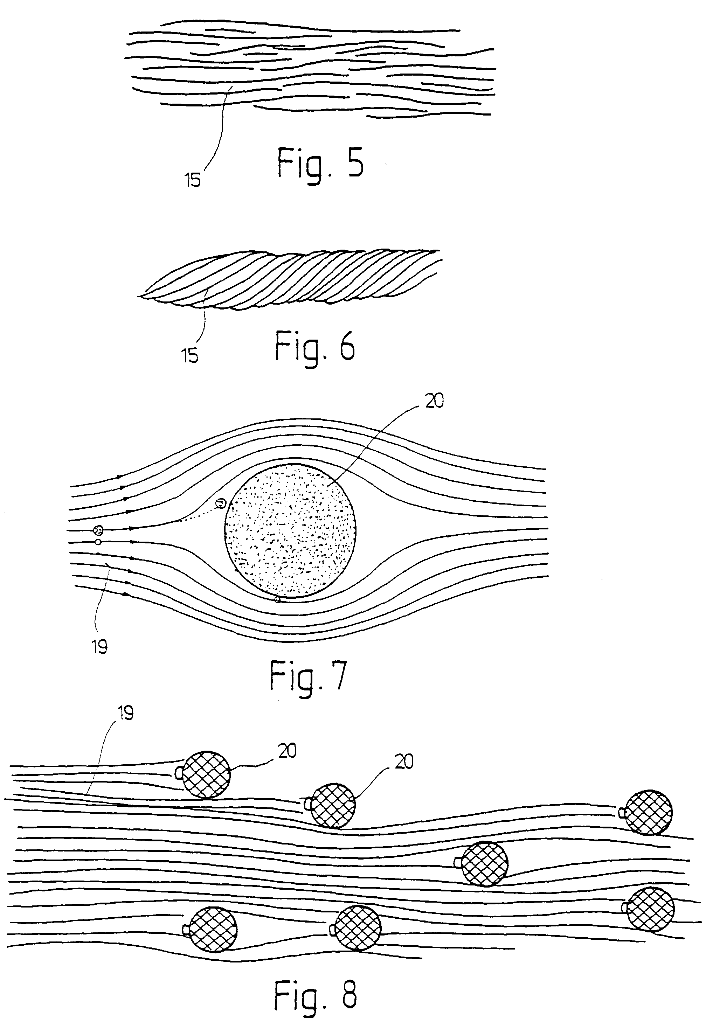

Das Gestrick 14 ist aus einem Garn 15 gearbeitet, das seinem Aufbau nach aus Stapelfasern (Fig. 5) oder aus Endlosfasern oder aus einer Mischung beider Fasertypen bestehen kann. Grundsätzlich kann das Garn 15 ein- oder mehrfädig ausgebaut sein, wobei in Einzelfällen auch sogenannte Core-Spun-Garne in Frage kommen.

Allgemein gilt, daß das Garn 15 möglichst wenig gedreht sein soll, um eine möglichst große Faseroberfläche freizulegen. Dies ist ohne weiteres aus den Fig. 5, 6 zu entnehmen, von denen Fig. 5 ein schwach gedrehtes und Fig. 6 ein stark gedrehtes Garn 15 zeigt. Das schwach gedrehte Garn 15 nach Fig. 5 weist eine Struktur auf, die es dem Abgas erlaubt, das Garn selbst zu durchströmen; je stärker das Garn gedreht ist, umso höher wird auch der Durchströmwiderstand für das Abgas.

Garne mit ca. 0,5 Drehungen pro Inch Länge oder sogar Rovings haben in der Praxis gute Ergebnisse erbracht. Auch texturiertes gelocktes Garn ist von Vorteil.

Das Fasermaterial, aus dem das Garn 15 gearbeitet ist, muß eine Warmfestigkeit aufweisen, die es erlaubt, den auftretenden Betriebstemperaturen über lange Betriebszeiträume standzuhalten.

Der in Frage kommende Temperaturbereich liegt erfahrungsgemäß zwischen ca. 200° und 800° C. Mit Rücksicht auf eine möglichst große Oberfläche sind Mikrofasern von Vorteil, worunter Fasern mit einem Faserdurchmesser von etwa 3 µm und mehr verstanden sind.

Das Material, aus dem die Fasern bestehen, ist in der Regel ein Keramikmaterial, doch kommen grundsätzlich, abhängig von dem Temperaturbereich, für den der Katalysator bestimmt ist, auch andere organische und anorganische Materialien in Frage. Gut geeignet sind alle Metalloxide. Verwendet wurden auch schon reine Kohlenstoffasern, die eine ganze Reihe von Vorteilen, beispielsweise elektrische Leitfähigkeit, bieten. Die Oberfläche der Fasern kann durch entsprechende Maßnahmen vergrößert werden. So sind z.B. Fasern mit rauher Oberfläche glatten Fasern in der Regel vorzuziehen. Durch Beeinflussung der Oberflächentopografie kann die Oberfläche erfahrungsgemäß etwa um den Faktor 20 vergrößert werden. Bei Kohlenstofffasern können sogenannte aktivierte Kohlenstoffasern verarbeitet werden, die eine wesentlich vergrößerte Oberfläche aufweisen und damit gleichzeitig auch als Absorptionsmittel, beispielsweise während der Kaltstartphase, benutzt werden können.

Allgemein ist zu sagen, daß in dem Gestrick 14 auch verschiedene Garne oder Fäden verarbeitet sein können, die auch aus unterschiedlichen Materialien bestehen können, so daß ihnen verschiedene Funktionen zukommen. Das Gestrick 14 kann einfädig und mehrfädig gearbeitet sein und beispielsweise wenigstens einen Metallfaden enthalten, der u.a. dem Gestrick 14 und damit dem Katalysatorkörper 8, 8a eine bestimmte Formstabilität verleiht, die abhängig von der gewählten Konfektionierung des Katalysatorkörpers 8, 8a und den Betriebsbedingungen von Bedeutung sein kann.

Der Aufbau des Katalysatorkörpers 8, 8a aus dem Gestrick 14 kann in verschiedener Weise erfolge, wie dies im einzelnen anhand einiger Beispiele noch erläutert wird. Grundsätzlich ist aber festzustellen, daß die Durchströmung des Gestrickes 14 so erfolgen soll, daß die Gasströmung keine widerstandsfreien Wege entlang der in einem Gestrick wegen der Maschenstruktur grundsätzlich vorhandenen Großporen oder "Maschenkavernen" findet. Insbesondere dann, wenn in dem Katalysatorkörper 8, 8a das zu reinigende Abgas nicht gezwungen ist, mehrere übereinanderliegende Gestricklagen zu durchströmen und dadurch verzweigten Strömungskanälen zu folgen, ist in der Regel darauf zu achten, daß das Gestrick 14 etwa in der Gestrickebene durchströmt wird, wie dies in Fig. 3 durch die Pfeile 16, 17 angedeutet ist. Eine Durchströmung quer zur Gestrickebene entsprechend dem Pfeil 18 ist, wie erwähnt, zumindest bei einlagiger Anordnung des Gestrickes 14 weniqer zweckmäßig, wie ein einfacher Blick auf Fig. 4 zeigt, in der die zwischen den einzelnen Maschenschenkeln und -bögen liegenden "Großporen" eines Gestrickes 14 (aus einem glatten Faden) grundsätzlich veranschaulicht sind.

Bei der Durchströmung in der Gestrickebene ergeben sich prinzipiell die in Fig. 8 dargestellten Strömungsverhältnisse, bei denen sichergestellt ist, daß der Abgasstrom 19 auf seinem Strömungsweg immer wieder Strömungswiderstände in Gestalt von Einzelfasern 20 trifft, die in der aus Fig. 7 ersichtlichen Weise möglichst großflächig umströmt werden.

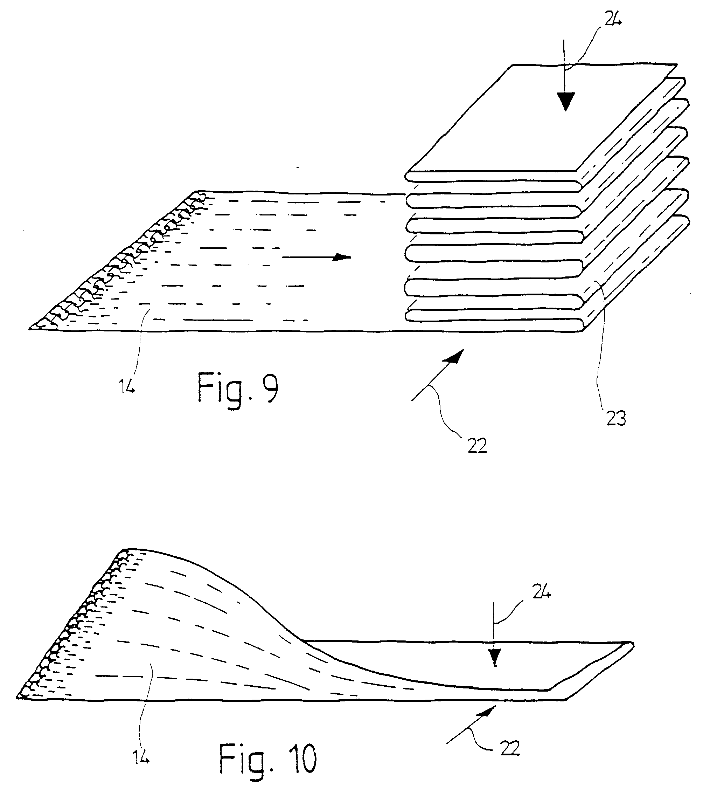

Zur Erstellung des das zu durchströmende Katalysatorvolumen liefernden Katalysatorkörpers 8, 8a geeignete Konfektionsierungstechniken für das Gestrick 14 sind in den Fig. 9 bis 14 beispielhaft veranschaulicht. Die gezeigten Ausführungsbeispiele sind nicht erschöpfend; sie können auch miteinander kombiniert oder durch andere Konfektionierungsmöglichkeiten ergänzt werden.

Bei der Ausführungsform nach Fig. 9 ist das Gestrick 14 plissiert, d.h. zu einem Stapel 23 aus aufeinanderliegenden Lagen des leporelloartig gefalteten Gestrickes zusammengelegt. Die beste Durchströmrichtung ist wiederum durch zwei Pfeile 22 angedeutet; sie erfolgt in der Gestrickebene der einzelnen Lagen. Eine Querdurchströmung, wie sie durch einen Pfeil 24 angegeben ist, ist grundsätzlich ebenfalls möglich, aber weniger vor-teilhaft.

Fig. 10 zeigt ein Ausführungsbeispiel, bei dem das Gestrick 14 gefaltet ist. Die Faltung kann dabei ein- oder mehrlagig sein; sie kann in Richtung der Maschenstäbchen oder der Maschenreihen erfolgen. Es sind auch Faltungen möglich, bei denen wenigstens eine Faltung in Richtung der Maschenstäbchen oder -reihen erfolgt und wenigstens eine anschließende Faltung quer dazu vorgenommen wird. Die bevorzugte Durchströmrichtung in der Gestrickebene ist für die dargestellte Faltung durch den Pfeil 22 angegeben; für eine Durchströmung in der Querrichtung dazu entsprechend dem Pfeil 24 gilt das für das Ausführungsbeispiel nach Fig. 9 Gesagte.

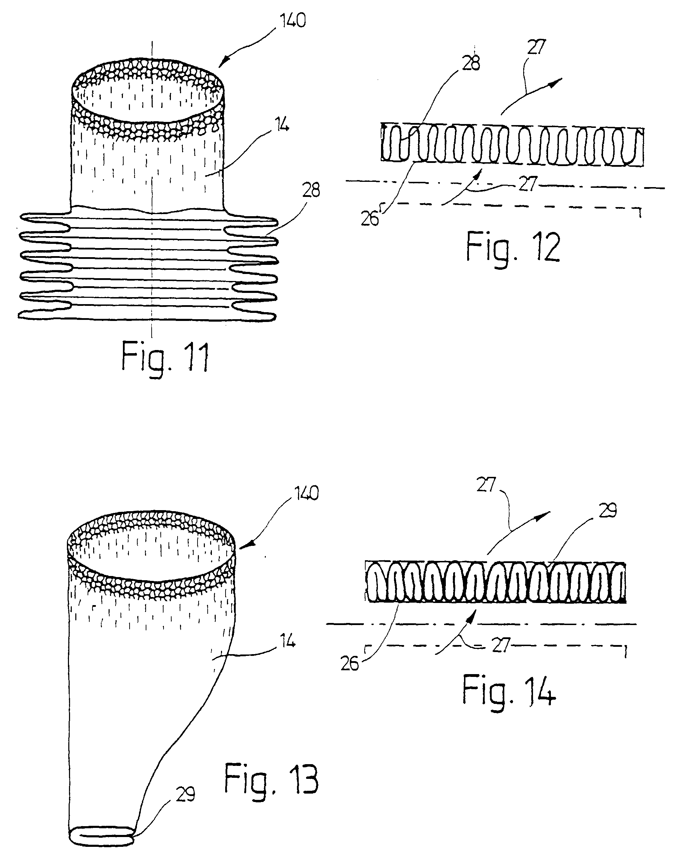

Die Ausführungsformen nach den Fig. 11 bis 14 gehen von einem Gestrick 14 aus, das in Gestalt eines rundgestrickten Warenschlauches 140 hergestellt wurde. Ein solcher Warenschlauch erlaubt es, auf einfache Weise Hohlformen zu erzeugen, die für viele Anwendungsfälle zweckmäßig sind. Sehr einfache Verhältnisse ergeben sich, wenn dieser Warenschlauch - vorzugsweise mehrlagig - nach Art eines Strumpfes auf ein entsprechendes kerzenförmiges gasdurchlässiges Gehäuse 11 nach Fig. 2 aufgezogen oder als Hohlzylinder in ein solches eingesetzt wird.

Die Fig. 11, 12 stellen eine Ausführungsform dar, bei der der Warenschlauch 140 in der dargestellten Weise bei 28 plissiert wird. Es ergibt sich ein zylinderförmiges Gebilde dessen Wände aus den aufeinanderliegenden Lagen des leporelloartig gefalteten Gestrickes 14 bestehen. Dieses hohlzylindrische Gebilde kann wiederum in die Hohlform 26 eingesetzt oder auf ein entsprechendes kerzenförmiges Gehäuse 11 (Fig. 2) aufgesetzt bzw. in ein solches eingefügt werden. Ein Vorteil dieser Ausführungsform liegt darin, daß bei der durch die Pfeile 27 angedeuteten radialen Durchströmrichtung die Lagen der plissierten Falten 28 im wesentlichen in der Ebene des Gestrickes 14 durchströmt werden.

Bei der Ausführungsform nach den Fig. 13, 14 schließlich wird der Warenschlauch 140 einmal oder mehrmals um eine in Längsrichtung des Schlauches sich erstreckende Achse gefaltet. Das gefaltete Gebilde 29 kann sodann schraubenartig zu einer Filterkerze aufgewickelt werden, die in der aus Fig. 14 ersichtlichen Weise entweder in der Hohlform 26 untergebracht oder auf ein kerzenförmiges Gehäuse 11 nach Fig. 2 aufgezogen bzw. in einem solchen angeordnet wird. Auch hier werden die Lagen des gefalteten Gestrickes 14 im wesentlichen in der Ebene des Gestrickes 14 durchströmt, wie dies durch die Pfeile 27 angegeben ist.

Grundsätzlich können bei all diesen Konfektionierungstechniken Katalysatorkörper 8, 8a kreiszylindrischer, nicht kreisförmigzylindrischer oder beliebig gestalteter Hohlform erzeugt werden. Die so gebildeten, insbesondere kerzenförmigen Katalysatoren können, wie in Fig. 2 dargestellt, entweder parallelgeschaltet eingesetzt werden, sie können aber auch hintereinandergeschaltet oder ineinandergeschachtelt betrieben werden. Auf diese Weise ist eine starke Vergrößerung der wirksamen Durchströmfläche möglich, wobei sich gleichzeitig geringe Druckverluste erzielen lassen.

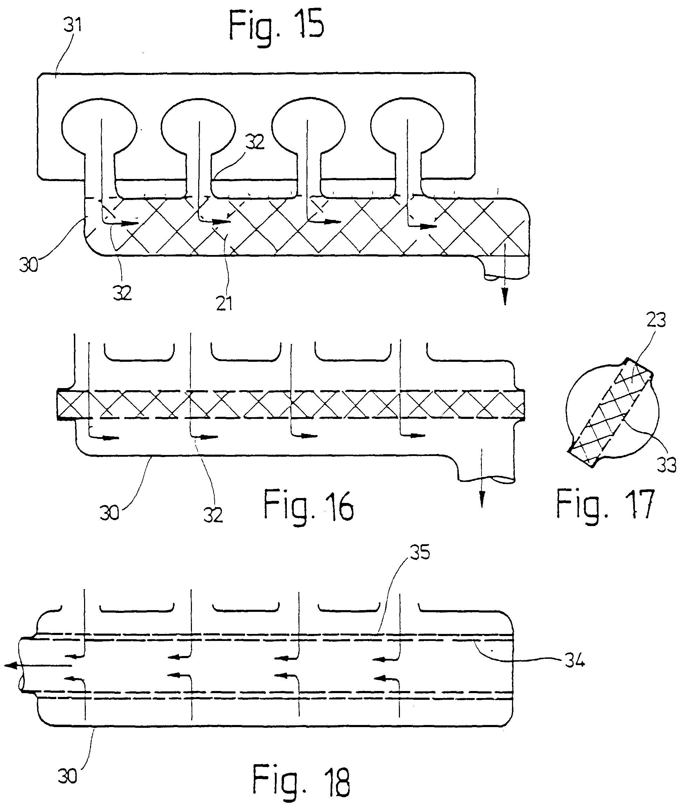

Während bei den Ausführungsformen von Katalysatoren, wie sie in den Fig. 1, 2 veranschaulicht sind, der Katalysatorkörper 8, 8a in einem eigenen Blechgehäuse 1 untergebracht ist, erlaubt es die Eigenart des diesen Katalysatorkörper bildenden Gestrickes auch für bestimmte Anwendungsfälle auf ein solches Gehäuse zu verzichten. Beispiele hierfür sind in den Fig. 15 bis 18 veranschaulicht, die Ausführungsbeispiele zeigen, bei denen das katalytisch wirksame Gestrick unmittelbar in dem bei 30 schematisch angedeuteten Auspuffkrümmer eines Verbrennungsmotors 31 untergebracht ist.

Bei der Ausführungsform nach Fig. 15 ist das Gestrick 14 zu einem Wickel 21 gemäß Fig. 11 aufgerollt, der direkt in dem Auspuffkrümmer 30 sitzt, welcher so das "Gehäuse"' für den Katalysator bildet.

Grundsätzlich ist es auch denkbar, diesen Wickel 21 an einer anderen Stelle der Auspuffleitung oder -rohre anzuordnen, derart, daß deren Rohrwandung als Katalysatorgehäuse benutzt wird. Pfeile 32 geben die Gasdurchströmrichtung an.

Die Ausführungsform nach den Fig. 16, 17 unterscheidet sich von jener nach Fig. 15 dadurch, daß in den Auspuffkrümmer 30 ein sich über die Länge des Auspuffkrümmers 30 erstreckendes, im Querschnitt im wesentlichen rechteckiges gasdurchlässiges Teilgehäuse 33 eingefügt ist, das das beispielsweise entsprechend Fig. 9, 10 plissierte oder gefaltete Gestrick 14 etwa in Form eines Stapels 23 enthält. Die Gasdurchströmrichtung ist wiederum durch Pfeile 32 angedeutet.

Bei der Ausführungsform nach Fig. 18 schließlich ist in den Auspuffkrümmer 30 ein sich über dessen Länge erstreckendes gasdurchlässiges Teilgehäuse 34 eingesetzt, das einen gegebenenfalls entsprechend Fig. 11, 12 plissierten oder entsprechend Fig. 13, 14 aufgewickelten zylindrischen Gestrickmantel 35 trägt, so daß sich insgesamt der grundsätzliche Aufbau einer Filterkerze ergibt, die in dem Auspuffkrümmer 30 liegt und deren Wandung im wesentlichen radial durchströmt ist, wie dies die Pfeile 32 zeigen.

Als katalytisch wirksames Material wird vorzugsweise Platin verwendet, wenn es darum geht, die Abgase von Verbrennungsmotoren von unverbrannten Kohlenwasserstoffen und von Kohlenmonoxid zu reinigen. Für andere Einsatzzwecke, bei denen die Umsetzung anderer in dem zu reinigenden Gasstrom enthaltener Schadstoffe im Vordergrund steht, oder bei denen die Aufgabe gestellt ist, die Verbrennungstemperatur, beispielsweise für Rußpartikel, abzusenken, können auch andere katalytisch wirksame Materialien Verwendung finden, die auf der Faseroberfläche des Gestrickes 14 sitzen und von dem zu reinigenden Gasstrom angeströmt sind. Beispiele sind Pt, Pd, V, Rh etc.

Bei der Verwendung von Platin als katalytisch wirksames Material kann die Plantinbeschichtung der Fasern in verschiedener Weise vorgenommen werden. Die Beschichtung kann aus der Gasphase erfolgen (chemical vapor Deposition = CVD). Ein anderes verfahren ist das der Naßimgrägnierung. Dieses Verfahren besteht darin, daß das Gestrick 14 mit einer verdünnten Lösung eines Platinsalzes getränkt wird, worauf das getränkte Gestrick getrocknet und anschließend das Salz thermisch zu Platin abgebaut werden.

In Abhängigkeit von den Reaktionsbedingungen bei der thermischen Zersetzung des Salzes können drei Modifikationen von Platin entstehen: Platin-Mohr (Platin mit physisorbiertem Sauerstoff), Platin-Schwamm (nicht Kristallines oberflächenreiches. Platin ohne sorbierten Sauerstoff) und Platin-Metall (kristallisiertes, aber oberflächenärmeres Platin).

### Ausführungsbeispiel 1:

Es wird ein Gestrick 14 entsprechend Fig. 3 aus einem Fasergarn geringer Drehung (0,5 Drehung pro Inch Länge) aus einer polykristallinen Mullitfaser mit einer Oberfläche von 0,2 bis 4 m²/g (zweiter Wert mit leaching) hergestellt. Der Faserdurchmesser beträgt ca. 10 µm und liegt damit außerhalb des für die Gesundheit gefährlichen Bereiches; es können aber auch Fasern mit einem Faserdurchmesser von 5 µm und dementsprechend größerer Oberfläche zum Einsatz kommen.

Das Gestrick 14 wurde sodann in einer verdünnten Lösung eines Platinsalzes getränkt (Naßimgrägnierung), worauf anschließend das Salz bei Temperaturen um 800° C zu Platin-Schwamm abgebaut (kalziniert) wurde. Die Beschichtungsmenge betrug ca. 1 Gewichtsprozent; sie kann jedoch auf bis zu ca. 1 Gewichtspromille abgesenkt werden.

### Ausführungsbeispiel 2:

Es wurde ein Gestrick 14 aus Kohlenstoff-Mikrofasern hergestellt, das eine Dichte von ca. 0,5 bis 1,0 g/cm³ aufweist. Die Fasern sind Monofilamente mit einem Faserdurchmesser von 6,5 µm; pro Strang sind 3000 Monofilamente vorhanden. Die auf Normalbedingungen bezogene Strömungsgeschwindigkeit betrug ca. 85 mm/sec. Untersucht wurde mit CO angereicherte Luft.

Bereits bei ca. 235° C ergab sich eine vollständige Umsetzung von CO in CO₂ bei einer Raumgeschwindigkeit von 10 000 h⁻¹ (Raumgeschwindigkeit: Durchsatz m³ Gas/h pro m³ Katalysatorvolumen).

Anstelle eines Platin-Katalysators könnte auch ein Rhodium-Katalysator oder ein Pt/Rh-Katalysator verwendet werden.

### Ausführungsbeispiel 3

Kohlenstoffasern, wie bei dem Ausführungsbeispiel 2, wurden zunächst mit SiC CVD-beschichtet. Auf die Fasern wurde sodann durch Naßimprägnierung mit einer Pt/Pd-Mischung und anschließender Kalzinierung bei c-a. 800° C eine katalytische Beschichtung aufgebracht.

Aus dem Gestrick wurde ein Wickel 21 entsprechend dem Ausführungsbeispiel 1 hergestellt, der axial mit Propan durchströmt wurde.

Bei einer Raumgeschwindigkeit von etwa 10000 h⁻¹ begann die katalytische Umsetzung des Propans bereits bei einer Starttemperatur von ca. 210° C; bei ca. 330° C wurde eine 100%ige Umsetzung des Propans festgestellt.

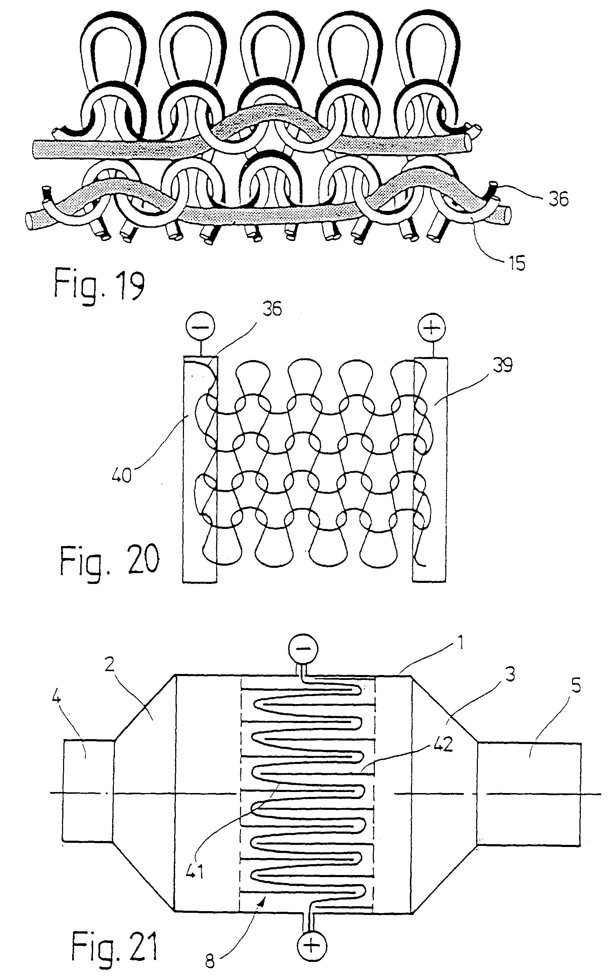

Beispielsweise die Verwendung von Kohlenstoffasern als Träger für das katalytisch wirksame Material erlaubt es, unmittelbar eine Innenbeheizung des Katalysatorkörpers 8, 8a vorzunehmen, weil die Kohlenstoffasern elektrisch leitend sind. Eine andere Möglichkeit für eine solche Innenbeheizung besteht darin, daß das Gestrick 14 zweifädig gearbeitet wird, wobei zusätzlich zu dem beispielsweise aus Keramikfasern bestehenden mit katalytisch wirksamem Material beschichtetem Garn 15 ein elektrisch leitfähiges Garn 36 verstrickt ist, das auf das Garn 15 aufplattiert ist. Ein Beispiel dafür ist in Fig. 19 dargestellt, zu dem zu bemerken ist, daß, wie bereits eingangs erläutert, für Zwecke, bei denen eine Innenbeheizung des Gestrickes 14 nicht erforderlich ist, das zweite Garn 36 auch aus einem elektrisch nichtleitenden Material bestehen kann, das so gewählt ist, daß es dem GestricK die für den jeweiligen Einsatzzweck erforderlichen zusätzlichen Eigenschaften verleiht.

Möglich ist es auch, in das Gestrick Schußfäden 37 einzuarbeiten, die im Falle einer gewünschten Innenbeheizung aus einem elektrisch leitfähigen Material bestehen, sonst aber aus einem Material hergestellt sind, das mit Rücksicht auf bestimmte zu erzielende Eigenschaften des Gestrickes ausgewählt wurde. Solche Eigenschaften sind beispielsweise eine erhöhte Formstabilität, eine verbesserte Festigkeit oder bestimmte Dehnungseigenschaften des Gestrickes, die in der Richtung der Maschenreihen verschieden von jenen in der Richtung der Maschenstäbchen sind.

Die elektrisch leitenden Fasern können in der aus Fig. 20 ersichtlichen Weise mit einer dort nicht weiter dargestellten Stromquelle verbunden werden. Zu diesem Zwecke sind die aus diesen Fasern bestehenden Garnelemente 36 des Gestrickes 14 an zwei Kontaktleisten 39, 40 elektrisch leitend angelötet oder angeschweißt, was im Falle von Kohlenstoffasern beispielsweise mit Hilfe einer entsprechenden vorherigen Beschichtung der Fasern geschehen kann. Die Kontaktleisten 39, 40 erstrecken sich im wesentlichen in Richtung der Maschenstäbchen, d.h. quer zur Strickrichtung. Auf diese Weise ergeben sich eindeutige Widerstandsverhältnisse und ein gleichmäßiger Stromdurchfluß der die einzelnen Maschenreihen bildenden Garnlängen.

Die grundsätzlich gleiche Anordnung ergibt sich naturgemäß auch für den Fall der Verwendung eines zweifädigen Gestrickes 14 nach Fig. 18; die Fig. 20 zeigt dann lediglich das aus dem Garn 36 bestehende Garnsystem.

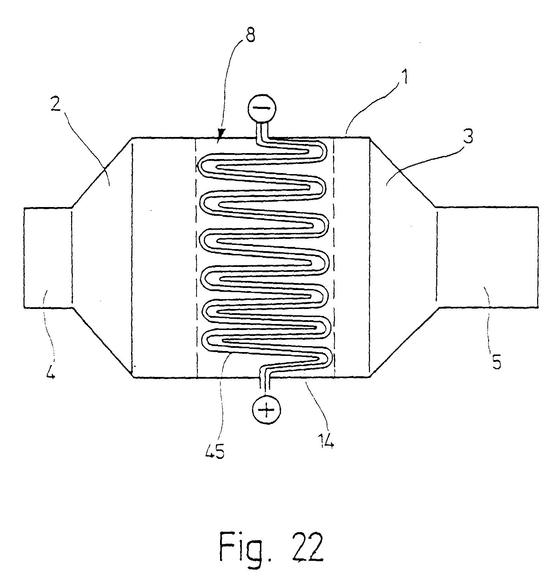

Um bei eine aus einem solchen elektrisch leitende Fasern enthaltenden Gestrick 14 bestehenden mehrlagigen Katalysatorkörper Kurzschlüsse zwischen den einzelnen Lagen des elektrisch innen beheizten Gestrickes 14 zu vermeiden, können einige einfache Maßnahmen ergriffen werden, von denen zwei Beispiele in den Fig. 21, 22 veranschaulicht sind:

Bei der Ausführungsform nach Fig. 21, die einen Katalysator ähnlich Fig. 1 zeigt, besteht der Katalysatorkörper 8 aus einem plissierten Gestrick 14, beispielsweise entsprechend Fig. 9 oder 11. Zwischen die einzelnen aufeinanderliegenden Lagen 41 des gefalteten Gestrickes 14 sind isolierende Zwischenschichten 42 eingelegt, die beispielsweise aus Glimmer bestehen und von beiden Stirnseiten her in den Katalysatorkörper 8 ragen.

Bei der anderen Ausführungsform nach Fig. 22 ist die Anordnung derart getroffen, daß bei der Faltung des Gestrickes 14 ein isolierendes zweites Gestrick 45, beispielsweise aus Keramik-oder Glasfasermaterial, beigelegt wurde, derart, daß die beiden Gestricke 14 in der gezeigten Weise zusammengefaltet sind.

Die elektrische Innenbeheizung des Katalysatorkörpers 8, 8a erlaubt es, den Katalysator rasch auf Betriebstemperatur zu bringen oder, wie bereits eingangs erläutert, zusätzliche Desorptionsvorgänge ablaufen zu lassen, wozu insbesondere auch ein doppelfädiges Gestrick verwendet werden kann, bei dem ein Fadensystem etwa aus aktivierten Kohlenstoffasern bestehen kann, die sich durch eine besonders große Oberfläche und damit ein hohes Adsorbtionsvermögen auszeichnen.

## Patentansprüche

1. Vorrichtung zur katalytischen Reinigung von strömenden Gasen, insbesondere von Abgasen von Verbrennungsmotoren mit einem in einem Strömungsweg anzuordnenden Gehäuse, das einen gasdurchlässigen Träger in Form eines textilen Flächengebildes aus warmfestem Fasermaterial enthält, auf das ein katalytisch wirksames Material aufgebracht ist, wobei der Träger ein Gestrick ist, dadurch gekennzeichnet, daß das Gestrick (14) leporelloartig gefaltet und zu einem Stapel aus aufeinanderliegenden Lagen zusammengelegt ist und in der Gestrickebene der einzelnen Lagen durchströmt ist.

2. Vorrichtung nach Anspruch 1, dadurch gekennzeichnet, daß das Fasermaterial keramische Mikrofasern enthält.

3. Vorrichtung nach Anspruch 2, dadurch gekennzeichnet, daß die Mikrofasern polykristalline Mullitfasern sind.

4. Vorrichtung nach einem der vorhergehenden Ansprüche, dadurch gekennzeichnet, daß das Fasermaterial Kohlenstoffasern enthält.

5. Vorrichtung nach einem der vorhergehenden Ansprüche, dadurch gekennzeichnet, daß die Oberfläcne der Fasern des Fasermaterials mindestens 0,1 bis 0,4 m²/g oder 0,2 bis 4 m²/g beträgt.

6. Vorrichtung nach einem der vorhergehenden Ansprüche, dadurch gekennzeichnet, daß das Gestrick (14) zumindest zweifädig aus verschiedenen Fasernmaterialien gearbeitet Ist.

7. Vorrichtung nach Anspruch 6, dadurch gekennzeichnet, daß in dem Gestrick wenigstens ein Metallfaden verarbeitet ist.

8. Vorrichtung nach Anspruch 4, dadurch gekennzeichnet, daß in dem Gestrick Kohlenstoffasern mit vergrößerter Oberfläche, z.B. aktivierte Kohlenstoffasern, verarbeitet sind.

9. Vorrichtung nach einem der vorhergehenden Ansprüche, dadurch gekennzeichnet, daß das Gestrick (14) Fasermaterial in Form von Rovings enthält.

10. Vorrichtung nach einem der vorhergehenden Ansprüche, dadurch gekennzeichnet, daß das Gestrick (14) Fasermaterial in Form von Garnen in (15) aus Stapel- oder Endlosfasern enthält.

11. Vorrichtung nach Anspruch 10, dadurch gekennzeichnet, daß die Garne eine lediglich schwache Drehung von bis zu einer Drehung pro Inch Länge aufweisen.

12. Vorrichtung nach einem der vorhergehenden Ansprüche, dadurch gekennzeichnet, daß das Gestrick (14) elektrisch leitende Fasern enthält, die mit Anschlußmitteln (39, 40) für eine elektrische Stromquelle elektrisch leitend verbunden sind.

13. Vorrichtung nach Anspruch 12, dadurch gekennzeichnet, daß die elektrisch leitenden Fasern in dem Gestrick (14) in Richtung der Maschenreihen stromdurchflossen sind und sich die elektrischen Anschlußmittel in Richtung der Maschenstäbchen über mehrere Maschenreihen hinweg erstrecken.

14. Vorrichtung nach einem der vorhergehenden Ansprüche, dadurch gekennzeichnet, daß das Gestrick (14) unter einer vorbestimmten Spannung gehalten ist.

15. Vorrichtung nach einem der vorhergehenden Ansprüche, dadurch gekennzeichnet, daß das Gestrick (14) kompaktiert ist.

16. Vorrichtung nach einem der vorhergehenden Ansprüche, dadurch gekenzeichnet, daß das Gestrickt (14) rundgestrickt ist.

17. Vorrichtung nach einem der vorhergehenden Ansprüche, dadurch gekennzeichnet, daß die Fasern eine zusätzliche Beschichtung mit einem anderen Material, insbesonders SiO₂ tragen.

18. Verwendung der Vorrichtung nach einem der vorhergehenden Ansprüche, bei einem einen Auspuffkrümmer aufweisenden Verbrennungsmotor, dadurch gekennzeichnet, daß das Gehäuse durch den Auspuffkrümmer (30) oder einen Teil der Abgasleitung gebildet ist.

## Claims

1. Device for catalytic purification of flowing gases, especially of exhaust gases from internal combustion engines, with a housing to be arranged in a flow path, said housing containing a gas-permeable support material in the form of a textile fabric made of heat-resistant fibrous material, to which a catalytically active material is applied, whereby the support material is a knitted fabric, characterised in that the knitted fabric (14) is folded in concertina-like fashion and folded together to form a stack comprising superposed layers, and the flow passes through in the plane of the individual layers of the knitted fabric.

2. Device according to Claim 1, characterised in that the fibrous material contains ceramic micro-fibres.

3. Device according to Claim 2, characterised in that the micro-fibres are polycrystalline mullite fibres.

4. Device according to one of the preceding claims, characterised in that the fibrous material contains carbon fibres.

5. Device according to one of the preceding claims, characterised in that the surface area of the fibres of the fibrous material amounts to at least 0.1 to 0.4 m²/g or 0.2 to 4 m²/g.

6. Device according to one of the preceding claims, characterised in that the knitted fabric (14) is at least of a double-threaded structure made from different fibrous materials.

7. Device according to Claim 6, characterised in that at least one metal thread is worked into the knitted fabric.

8. Device according to Claim 4, characterised in that carbon fibres with increased surface area, e.g. activated carbon fibres, are worked into the knitted fabric.

9. Device according to one of the preceding claims, characterised in that the knitted fabric (14) contains fibrous material in the form of rovings.

10. Device according to one of the preceding claims, characterised in that the knitted fabric (14) contains fibrous material in the form of yarns in (15) made of staple fibres or continuous filaments.

11. Device according to Claim 10, characterised in that the yarns are only loosely twisted with up to one twist per inch of length.

12. Device according to one of the preceding claims, characterised in that the knitted fabric (14) contains electrically conductive fibres, which are conductively connected to connection elements (39, 40) for an electric current source.

13. Device according to Claim 12, characterised in that current flows through the electrically conductive fibres in the knitted fabric (14) in the direction of the courses, and the electrical connection elements extend beyond the courses in the direction of the wales.

14. Device according to one of the preceding claims, characterised in that the knitted fabric (14) is held under a predetermined tension.

15. Device according to one of the preceding claims, characterised in that the knitted fabric (14) is compressed.

16. Device according to one of the preceding claims, characterised in that the knitted fabric (14) is circular knitted.

17. Device according to one of the preceding claims, characterised in that the fibres are additionally coated with another material, in particular SiO₂.

18. Use of the device according to one of the preceding claims in an internal combustion engine having an exhaust elbow, characterised in that the housing is formed by the exhaust elbow (30) or a portion of the exhaust pipe.

## Revendications

1. Dispositif d'épuration catalytique de gaz en écoulement, notamment de gaz d'échappement de moteurs à combustion interne, avec une enveloppe destinée à être placée sur un trajet d'écoulement, qui contient un support perméable au gaz sous la forme d'un produit textile plat en une matière fibreuse résistante à la température, sur lequel est appliquée une matière à action catalytique, le support étant un tissu à mailles, caractérisé par le fait que le tissu à mailles (14) est plié en accordéon, est disposé en une pile de plis placés les uns sur les autres et est traversé par les gaz dans le plan de tricotage des différents plis.

2. Dispositif selon la revendication 1, caractérisé par le fait que la matière fibreuse contient des micro-fibres de céramique.

3. Dispositif selon la revendication 2, caractérisé par le fait que les micro-fibres sont des fibres de mullite polycristaline.

4. Dispositif selon l'une des revendications précédentes, caractérisé par le fait que la matière fibreuse contient des fibres de carbone.

5. Dispositif selon l'une des revendications précédentes, caractérisé par le fait que la surface des fibres de la matière fibreuse est d'au moins 0,1 à 0,4 m²/g ou 0,2 à 4 m²/g.

6. Dispositif selon l'une des revendications précédentes, caractérisé par le fait que le tissu à mailles (14) est travaillé à partir d'au moins deux fils en des matières fibreuses différentes.

7. Dispositif selon la revendication 6, caractérisé par le fait qu'au moins un fil métallique est intégré dans le tissu à mailles.

8. Dispositif selon la revendication 4, caractérisé par le fait que des fibres de carbone dont la surface est augmentée, par exemple des fibres de carbone actifé, sont intégrées dans le tissu à mailles.

9. Dispositif selon l'une des revendications précédentes, caractérisé par le fait que le tissu à mailles (14) contient de la matière fibreuse sous la forme de rovings.

10. Dispositif selon l'une des revendications précédentes, caractérisé par le fait que le tissu à mailles (14) contient de la matière fibreuse sous la forme de fils formés à partir de fibres empilées ou de fibres continues.

11. Dispositif selon la revendication 10, caractérisé par le fait que les fils présentent seulement une faible torsion allant jusqu'à un tour par pouce (25, 4 mm) de longueur.

12. Dispositif selon l'une des revendications précédentes, caractérisé par le fait que le tissu à mailles (14) contient des fibres électro-conductrices qui sont reliées de manière conductrice de l'électricité à des moyens de connexion (39, 40) pour une source de courant électrique.

13. Dispositif selon la revendication 12, caractérisé par le fait que les fibres électro-conductrices dans le tissu à mailles sont traversées par le courant dans la direction des rangs de mailles et que les moyens de connexion électrique s'étendent dans la direction des colonnettes des mailles sur plusieurs rangs de mailles.

14. Dispositif selon l'une des revendications précédentes, caractérisé par le fait que le tissu à mailles (14) est maintenu sous une tension prédéterminée.

15. Dispositif selon l'une des revendications précédentes, caractérisé par le fait que le tissu à mailles (14) est comprimé.

16. Dispositif selon l'une des revendications précédentes, caractérisé par le fait que le tissu à mailles (14) est tricoté en rond.

17. Dispositif selon l'une des revendications précédentes, caractérisé par le fait que les fibres portent un revêtement supplémentaire en une matière autre, notamment en SiO₂.

18. Utilisation du dispositif selon l'une des revendications précédentes dans un moteur à combustion interne pourvu d'un tuyau d'échappement, caractérisée par le fait que l'enveloppe est formée par le collecteur d'échappement (30) ou pour une partie de la conduite d'échappement.
